# EUROPEAN PATENT SPECIFICATION

(11) **EP 2 139 339 B1**
(45) Date of publication and mention of the grant of the patent: **31.01.2018**
(21) Application number: 08719885.9
(22) Date of filing: 25.03.2008
(51) Int. Cl.: A01N 63/00, A01P 7/04

(54) **FORMULATION FOR THE BIOLOGICAL CONTROL OF INSECT-PESTS**
FORMULIERUNG ZUR BIOLOGISCHEN BEKÄMPFUNG VON SCHADINSEKTEN
FORMULATION POUR LE CONTRÔLE BIOLOGIQUE D'INSECTES NUISIBLES

(30) Priority: 23.03.2007 EP 07394004
(43) Date of publication of application: 06.01.2010
(73) Proprietor: Nemos Horticultural Limited, Dublin 3 (IE)
(72) Inventor: AL-AMIDI, Abdulhamid, H., K., Arklow Co. Wicklow (IE)
(74) Representative: Purdylucey Intellectual Property
(86) International application number: PCT/IE2008/000027
(87) International publication number: WO 2008/117262

(56) References cited:
- WO-A-91/06642
- WO-A-94/19940
- NEUMANN G ET AL: "Interspecific interactions among three entomopathogenic nematodes, Steinemema carpocapsae Weiser, S. feltiae Filipjev, and Heterorhabditis bacteriophora Poinar, with different foraging strategies for hosts in multipiece sand columns" ENVIRONMENTAL ENTOMOLOGY, ENTOMOLOGICAL SOCIETY OF AMERICA, COLLEGE PARK, MD, US, vol. 35, no. 6, December 2006 (2006-12), pages 1578-1583, XP008086497 ISSN: 0046-225X cited in the application
- WANG X D ET AL: "Infection of the entomopathogenic nematode, Steinernema carpocapsae, as affected by the presence of Steinernema glaseri" JOURNAL OF NEMATOLOGY, SOCIETY OF NEMATOLOGISTS, COLLEGE PARK, MD, US, vol. 31, no. 2, June 1999 (1999-06), pages 207-211, XP008086543 ISSN: 0022-300X
- KAYA H K ET AL: "Two entomopathogenic nematode species with different search strategies for insect suppression" ENVIRONMENTAL ENTOMOLOGY, ENTOMOLOGICAL SOCIETY OF AMERICA, COLLEGE PARK, MD, US, vol. 22, no. 4, 1993, pages 859-864, XP008086498 ISSN: 0046-225X cited in the application
- KOPPENH FER A M ET AL: "Coexistence of entomopathogenic nematode species (Steinernematidae and Heterorhabditidae) with different foraging behavior" FUNDAMENTAL AND APPLIED NEMATOLOGY, MONTROUGE, FR, vol. 19, no. 2, 1996, pages 175-183, XP008086501 ISSN: 1164-5571
- GAUGLER RANDY ET AL: "Ecology in the service of biological control: The case of entomopathogenic nematodes" OECOLOGIA (BERLIN), vol. 109, no. 4, 1997, pages 483-489, XP002461180 ISSN: 0029-8549
- LEWIS EDWIN E ET AL: "Behavioral ecology of entomopathogenic nematodes" BIOLOGICAL CONTROL, vol. 38, no. 1, July 2006 (2006-07), pages 66-79, XP005472790 ISSN: 1049-9644
- CAMPBELL J F ET AL: "Evolution of host search strategies in entomopathogenic nematodes." JOURNAL OF NEMATOLOGY, vol. 35, no. 2, June 2003 (2003-06), pages 142-145, XP002461183 ISSN: 0022-300X
- DILLON A B ET AL: "Suppression of the large pine weevil Hylobius abietis (L.) (Coleoptera: Curculionidae) in pine stumps by entomopathogenic nematodes with different foraging strategies", BIOLOGICAL CONTROL, SAN DIEGO, CA, US, vol. 38, no. 2, 1 August 2006 (2006-08-01) , pages 217-226, XP024905454, ISSN: 1049-9644, DOI: 10.1016/J.BIOCONTROL.2006.03.004 [retrieved on 2006-08-01]
- FERGUSON ET AL: "Persistence, vertical distribution and activity of entomopathogenic nematodes in alfalfa snout beetle (Coleoptera: Curculionidae) infested fields", ENVIRONMENTAL ENTOMOLOGY, ENTOMOLOGICAL SOCIETY OF AMERICA, vol. 24, 1 January 1995 (1995-01-01), pages 149-158, XP009193892, ISSN: 0046-2268

## Description

### Introduction

The invention relates to a formulation for use in the biological control of insect pests comprising a cohort of infective juvenile insect-parasitic nematodes.

### Background to the Invention

Entomopathogenic nematodes refer to nematodes that are parasitic to one or more species of insect. The most important Order of entomopathogenic nematodes is the Rhabditida, which contains several families, many of whose members are parasitic to insects. The *Steinernematidae* and the *Heterorhabditidae* are well known members of this order (Rhabditida). Both the families, *Steinernematidae* and *Heterorhabditidae* contain several species, each specialised for attacking a specific group of insect pests (Table 1). Although the two families are not closely related, phylogenetically, both share similar life histories. The cycle begins with an infective juvenile (non-feeding juvenile), whose only function is to seek out and infect new hosts. After entering the insect via natural body openings, mouth, anus, spiracles or areas of thin cuticle, the infective juveniles release an associated mutualistic bacterium. These bacteria of the genus *Xenorhabdus* or *Photorhabdus*, associated with *steinerernematides* and *heterorhabditids,* respectively, cause host mortality within 48 hours.

The foraging strategies of entomopathogenic nematodes vary between species, and determine their soil depth distribution and host preference. In order to find hosts, infective juveniles use strategies are that vary based on ambush or cruise foraging or a combination of both. In order to ambush prey, some *Steinernema* species raise their bodies off the soil surface so they are better poised to attach to passing insects. Other species adopt a cruising strategy, they roam through the soil searching for potential hosts. These foraging strategies influence which hosts the nematodes infect. For example, ambush predators such as *Steinernema carpocapsae* infect more insects on the surface, while cruising predators like *Heterorhabditis bacteriophora* infect insects that live deep in the soil.

One of the major problems which arise with the use of existing, commercially available, biological control products, is that the products contain only one species of the above beneficial nematodes and, as such, are able to control only a single or one group of target insect species, make it uneconomically viable comparing with the use of chemical pesticide which control a wide range of insect species, beneficial or pests alike, in one application. Commercial growers will not adopt biological control agents that do not provide efficacy comparable with standard chemical insecticides.

Neumann et al. (2006) studied the interactions and spatial separation among one heterorhabditid and two steinernematid nematode species with different foraging strategies within a sand column. They introduced the nematodes 7 days before the host was introduced to the system. They found that each individual species performed better on its own than in a three species combination. They also found this to be the case at all depths, with the exception of the cruiser forager, *H. bacteriophora,* which performed better in combination than alone, but only at a deeper level. This is especially a problem as many of the insect pests targeted by domestic and commercial growers reside in a soil depth range of 0-25cm.

Wang X E (Journal of Nematology, Society of Nematologists, College Park, MD, US, vol 31, no. 2, June 1999) investigated the infection behaviour of *Steinernema carpocapsae* infective juveniles in the presence and absence of *S.glaseri.*

Kaya H K (Environmental Entomology, Entomological Society of America, College Park, vol. 22, no. 4, 1993) and Koppenh, Fer A M (Fundamental and Applied Nematology, Montrouge, Fr, vol. 19, no. 2, 1996) discuss combining two species of entomopathogenic nematodes with different search strategies.

Gaugler Randy (Oecologia, vol. 109, no. 4, 1997) reviewed the ecology of entomopathogenic nematodes and the development of nematodes as alternatives to chemical insecticides. Lewis Edwin (Biological Control, vol. 38, no. 1, July 2006) discusses the behaviour and ecology of entomopathogenic nematodes in relation to their function as biological control agents. Campbell (Journal of Nematology, vol. 35, no. 2, June 2003) discusses the evolution of host search strategies in Entomopathogenic nematodes, in particularly nematodes genus *Steinernema.*

WO91/06642 discloses an insecticidal composition for use against soil inhabiting insects comprising an amount of steinernematid or heterohabditid nematode and WO94/19940 discloses a method of packaging third stage juvenile entomopathogenic nematodes.

Dillon (Biological Control, San Diego, CA, US, vol. 38, no. 2, 1 August 2006) discusses the suppression of Hylobius abietis by entomopathogenic nematodes. Ferguson (Environmental Entomology, Entomological Society of America, vol. 24, 1 January 1995) evaluated the movement and activity of four isolates of entomopathogenic nematodes.

It is an object of the invention to overcome at least one of the above problems.

### Statements of Invention

The invention relates to packaged product comprising a multispecies nematode formulation for killing target insect pests and the methods of using this product. The formulation has at least three species of nematode from at least two families (*Steinernematidae* and *Heterorhabditidae*), and is formulated such that the species from one family outnumber the species from the other family. Thus, the formulation includes a majority species and a minority species. An example would be a formulation comprising *Steinernema riobravis, Heterorhabditis bacteriophora* and *Heterorhabditis megidis,* where *Steinernema riobravis* is the minority species. The Applicant has surprisingly discovered that in such a formulation, the killing power of the minority species is greatly enhanced due to competition provided by the presence of the majority species. Thus, formulations may be targeted to specific target pests by including as the minority species one (or more) species of nematode that are specialised parasites to the specific target pest.

According to the invention, there is provided a formulation for use in the biological control of insect pests comprising a cohort of infective juvenile insect-parasitic nematodes and a medium for the nematodes, the cohort consisting essentially of a mixture of three species, in which two of the species are from a first genus (majority species) selected from one of *Steinernema* and *Heterorhabtidis* and one of the species is from a second genus (minority species)selected from the other of *Steinernema* and *Heterorhabtidis.* The number of species from the majority species is greater than the number of species from the minority species.

A formulation according to the invention provides a number of advantages over known nematode formulations.

First, as the formulation comprises a majority species and a minority species which are in competition for insect pests, the species present from the minority species will compete more aggressively for hosts that those from the first genus. This surprisingly results in the minority species being more effective in infecting and killing insect pests. Further, it allows the formulator to tailor any given formulation for effective killing of a predetermined target insect pest (or group of target pests) by including a species specifically directed to that target insect. pest as the minority species. As an example, a formulation directed to treatment of root weevil infestation of turf grass could include *Steinernema riobravis, Heterorhabditis bacteriophora,* and *Heterorhabditis megidis,* where *Steinernema riobravis* is chosen as the minority species as it is a specialised parasite of the root weevil. In this formulation, as *Steinernema riobravis* is the representative of the minority species, it will compete more aggressively for hosts that those from the first genus (majority), and as such will have an increased killing power compared to single nematode species when applied on its own (as an individual application outside of the formula).

Secondly, the formulations of the invention, by virtue of including three different species of nematode, will effectively have a broad spectrum killing power by virtue of the fact that nematode species specialised in infective killing of different varieties of nematode will be included in the formulation. Thus, taking the example above, the three species present will have an effective killing power against the following list of insect pests: root weevils, tawny mole crickets, southern mole crickets, armyworm, cutworm, webworm, wood borers, artichoke plume moth, and scarab, with a particularly effective killing power against those pests for which the minority species is a specialised killer. Thus, the formulation of the invention provide a killing efficacy which is comparable to convention chemical pesticides. Thirdly, as the nematode species chosen for the formulation are highly specific parasites, they will not attack and kill beneficial insects. In contrast, chemical pesticides are unable to distinguish between beneficial insects and unwanted insect pests.

Without being bound by theory, it is also believed that the use of a multispecies nematode formulation according to the invention, in which a degree of competition exists between the minority and majority species, has the effect of controlling the population of nematodes and preventing an uncontrolled increase in the nematode population.

The species of nematode present in the formulation will include (a) at least one cruiser foraging species and at least one ambusher foraging species, or (b) a nematode that is capable of both cruiser and ambusher foraging strategies. This allows the combined species of the formulation to have a broad foraging strategy. Thus, typically the formulation will include two ambusher foraging species from the same genera and one cruiser foraging species from a different genera, or two cruiser foraging species from the same genera and one ambusher foraging species from a different genera. In the specification, the term "cruiser foraging "species" is taken to mean a species of nematode that adopts a foraging strategy of roaming through the soil looking for potential hosts. Examples of cruiser foraging species include *Heterorhabditis bacteriophora, Steinernema glaseri, Steinernema kraussei, Heterorhabditis megidis.* In this specification, the term "ambusher foraging species" shall be taken to mean a species of nematode that adopts a foraging strategy of raising their bodies off the surface of the soil so that they are better disposed to attach to insect pests passing along the surface of the soil. Examples of ambusher foraging species include *Steinernema carpocapsae,* and *Steinernema scapterisci.* Examples of a nematode species that are capable of both cruiser and ambusher foraging strategies are *Steinernema riobravis, and Steinernema feltiae.* Thus, a formulation according to this embodiment will have an advantage of being able to attack insect pests that inhabit above the soil as well as those that inhabit below the soil, thereby enhancing the broad spectrum nature of the formulation of the invention.

Surprisingly, the Applicant has shown that when the formulations of the invention employ species that have the same foraging strategy (i.e. all cruiser or all ambusher), that the presence of the majority and minority species has the effect of altering the foraging strategy of the species such that they adapts a broad foraging strategy. This will allow the formulator a degree of flexibility when formulating a mixture of nematode species to achieve a broad foraging strategy.

Typically, the cohort of infective juvenile nematodes consists essentially of two species from the first genus and one species from the second genus. In this way, the species from the second genus (minority species) will be in a minority in the formulation, and will therefore have to compete more strongly than the species of the first genus (majority species) . This results in the minority species having a greater destructive action, as when compared to the same single nematode species if applied on its own (that is to say, in a comparatively equal quantity, as an individual application outside of the formula, for example a species individually and separately applied).

In a preferred embodiment of the invention, the cohort of infective juvenile nematodes consists essentially of two species from the first genus and one species from the second genus.

The first and second genus are selected from the two families comprising: *Steinernematidae;* and *Heterorhapditidae.*

In one embodiment of the invention, the first genus (majority species) is *Steinernema* (*Steinernematidae*) and the second genus (minority species) is *Heterorhabditis (Heterorhapditidae).* Typically, the two or more species of *Steinernematidae* are selected from the group comprising: *Steinernema feltiae; Steinernema scapterisci; Steinernema riobravis; Steinernema carpocapsae;* and *Steinernema kraussei.* Ideally, the two species of *Steinernematidae* are selected from the group comprising *Steinernema feltiae, Steinernema kraussei,* and *Steinernema carpocapsae.*

Suitably, the at least one species of Heterorhapditidae is selected from the group comprising: *Heterorhabditis megidis Heterorhabditis downesi;* and *Heterorhabditis bacteriophora.* Ideally, the at least one species of *Heterorhapditidae* consists of *Heterorhabditis bacteriophora.*

In another embodiment of the invention, the first genus (majority species) is *Heterorhabditis (Heterorhapditidae)* and the second genus (minority species) is *Steinernema (Steinernematidae)*. In this case, typically the two species of *Heterorhapditidae* are selected from the group comprising: *Heterorhabditis megidis; Heterorhabditis downesi* and *Heterorhabditis bacteriophora.* Suitably, the at least one species of *Steinernematidae* is selected from the group comprising: *Steinernema feltiae; Stinernema scapterisci; Steinernema riobravis; Steinernema carpocapsae; and Steinernema kraussei.* Ideally, the at least one species of *Steinernematidae* is selected from the group comprising: *Steinernema feltiae; Steinernema kraussei and Steinernema carpocapsae.*

In one embodiment, a formulation according to the invention is selecetd from the group consisting of:
(a) *Heterorhabditis downesi, Heterorhabditis bacteriophora* and *Steinernema feltiae;*
(b) *Heterorhabditis downesi, Heterorhabditis bacteriophora* and *Steinernema carpocapsae;*
(c) *Heterorhabditis megidis, Heterorhabditis bacteriophora* and *Steinernema kraussei;*
(d) *Heterorhabditis megidis, Heterorhabditis downsei* and *Steinernema kraussei;*
(e) *Heterorhabditis downesi, Heterorhabditis megidis* and *Steinernema carpocapsae;*
(f) *Steinernema feltiae, Steinernema carpocapsae* and *Heterorhabditis downesi;*
(g) *Steinernema felliae, Steinernema carpocapsae* and *Heterorhabditis besteriophora;*
(h) *Steinernema scapterisci, Steinernema carpocapsae* and *Heterorhabditis bacteriophora;*
(i) *Steinernema scapterisci, Steinernema carpocapsae* and *Heterorhabditis downesi;*
(j) *Steinernema feltiae, Steinernema carpocapsae* and *Heterorhabditis megidis;* and
(k) *Steinernema scapterisci, Steinernema carpocapsae* and *Heterorhabditis megidis;*

Suitably, the formulation additionally comprises a suitable media for the nematodes. Typically, the media is selected from the group comprising vermiculite, fine clay, water, and other types of suitable media. Generally, the media will comprise between 10 and 15% of the formulation.

Suitably, the cohort of nematodes will comprise at least 20%, 25%, 30%, or 33%, of the minority species. Thus, for example, in a cohort of three species including a single minority species, at least 20% of the total numbers of nematodes in the cohort will consist of the minority species. Ideally, the different species in the cohort will be present in approximately equal numbers (i.e. +/- 5%).

The invention also relates to a method for the biological control of a predetermined target insect pest, which method employs a formulation packaged product according to the invention in which the minority species in the formulation is parasitic to the predetermined target pest, the method comprising the step of applying the biological control formulation to the soil or other media in which the agricultural product is growing. Thus, in the case of a formulation consisting of *Steinernema feltiae, Steinernema carpocapsae,* and *Heterorhabditis downesi,* where the latter is the minority species, this formulation would be especially suitable for treating Root weevils, Wood borers, and/or Scarabs, as the minority species is especially parasitic to these insect pests. As indicated above, and in the data below, this formulation would have a far greater killing efficiency against the predetermined target pests than if the minority species were used on it's own. However, it should be noted that while the formulation would be especially suitable for treating the target insect pest, because the formulation includes two other species of nematode, it will also be effective in killing insect pests for which the latter two species of nematode are specialised killers. Thus, in the above example, the formulation would also provide effective action against a number of different insect pests, including Sciarid larvae, fungus gnats, armyworm, cutworm etc.

Thus, in one embodiment, the target insect is one or more of Sciarid larvae and Fungus gnats, and wherein the cohort of infective juvenile nematodes consists of *Steinernema felitae* and two species of *Heterorhabditidae.*

In another embodiment, the target insect is one or more of the Tawny mole cricket and the Southern mole cricket , and wherein the cohort of infective juvenile nematodes consists of Steinernema *scapterisci* and two species of *Heterorhabditidae.*

In another embodiment, the target insect is one or more of Root weevils, the Tawny mole cricket, and the Southern mole cricket, and wherein the cohort of infective juvenile nematodes consists of *Steinernema riobravis,* and two species of *Heterorhabditidae.*

In another embodiment, the target insect is a Root weevil, and wherein the cohort of infective juvenile nematodes consists of *Heterorhabditis megidis*, and two species of *Steinernematidae.*

In another embodiment, the target insect is one or more of Armyworms, Cutworms, Webworms, Root weevils, Wood borers, Artichokes Plume moths, and wherein the cohort of infective juvenile nematodes consists of *Steinernema carpocapsae* and two species of *Heterorhabditidae.*

In another embodiment, the target insect is one or more of Root weevils, Wood borers, and Scarabs, and wherein the cohort of infective juvenile nematode consists of *Heterorhabditis bacteriophora* and two species of *Steinernamitidae.*

Also described is a method for effective the biological control of a target insect pest of an agricultural or horticultural product, which target pest predominantly inhabits an environment between 0cm and 25cm below surface level, which method employs a biological control formulation according to the invention, the method comprising the step of applying the biological control formulation to the soil or other media in which the agricultural or horticultural product is growing. A target pest that predominantly inhabits an environment between 0cm and 25cm below surface level is one in which at least 50%, ideally at least 75%, of the target pest population resides in this range of depths. Thus, for example, insect pests of mushrooms, strawberries, and most domestic and horticultural plants, would reside within this range of depths.

Also described is the use of a formulation according to the invention to treat one or more of Sciarid larvae and Fungus gnats, wherein the cohort of infective juvenile nematodes consists of *Steinernema felitae* and two species of *Heterorhabditidae.*

In all of the above examples, the formulation would have a formidable killing effect against the target insect pest, and an effective killing effect against many other insect pests, for which the two species from the majority genus would be effective against.

Also described is the use of a formulation according to the invention to treat one or more of the Tawny mole cricket and the Southern mole cricket, and wherein the cohort of infective juvenile nematodes consists of *Steinernema scapterisci* and two species of *Heterorhabditidae.*

Further described is the use of a formulation according to the invention to treat one or more of Root weevils, the Tawny mole cricket, and the Southern mole cricket, and wherein the cohort of infective juvenile nematodes consists of *Steinernema riobravis,* and two species of *Heterorhabditidae.*

Also described is the use of a formulation according to the invention to treat a Root weevil, and wherein the cohort of infective juvenile nematodes consists of *Heterorhabditis megidis,* and two species of *Steinernematidae.*

Also described is the use of a formulation according to the invention to treat one or more of Armyworms, Cutworms, Webworms, Root weevils, Wood borers, Artichoke Plume moths, and wherein the cohort of infective juvenile nematodes consists of *Steinernema carpocapsae* and two species of *Heterorhabditidae.*

Also described is the use of a formulation according to the invention to treat one or more of Root weevils, Wood borers, and Scarabs, and wherein the cohort of infective juvenile nematodes consists of *Heterorhabditis bacteriophora* and two species of *Steinernamitidae*.

In a particularly preferred embodiment of the invention, there is provided a formulation for use in the biological control of insect pests comprising a cohort of infective juvenile insect-parasitic nematodes from three species, wherein at least two of the species are of a first genus, and at least one of the species are from a second genus, wherein the number of species from the first genus is greater than the number of species from the second genus, and wherein the formulation comprises at least one ambusher foraging species of nematode and at least one foraging species of nematode, or at least one nematode species that is capable of both cruiser and ambusher foraging strategies.

The invention also relates to a packaged product comprising a formulation according to the invention, the packaged product comprising information indicating the identity of the predetermined target insect pest (or pests), wherein the minority species in the formulation is a specialised parasite to the predetermined target insect pest (or pests). Typically, the packaged product further comprises instructions for a user to apply the formulation to a desired ecosystem. Suitably, the formulation in the packaged product additionally comprises a suitable media for the nematodes. Typically, the media is selected from the group comprising vermiculite, fine clay, sponge, water, and other types of suitable media. Generally, the media will comprise between 10 and 15% of the formulation.

The invention also relates to a method of formulating a cohort of infective juvenile insect-parasitic nematodes for use in the biological control of a predetermined target insect pest (or pests), which method comprises providing a formulation of the invention, wherein the minority species in the formulation is a specialised parasite to the predetermined target insect pest (or pests).

Table I provides a list of nematode species along with a list of the target pests for which the nematode species is a specialised parasite.

### Detailed Description of the Invention

The *Steinernema (Steinernematidae)* and *Heterorhabditis (Heterorhabditidae)* genera contain several species, each specialised for attacking a specific type or group of insect pests (Table I). The formulations of the invention, by virtue of comprising at least three different species of nematode, thereby provide a broad spectrum effect against a number of types and classes of insect pests.

**Table I**

| Current use of beneficial nematodes as biological control agents | | | |
|---|---|---|---|
| Nematode Species | Foraging strategy | Insect pest | Commodity |
| Steinernema feltiae | both ambusher and cruiser | Sciarid larvae, Fungus gnats. | Mushrooms, Ornamentals |
| Steinernema scapterisci | ambush forager | Tawny mole cricket, Southern mole cricket. | Turf grass |
| Steinernema riobravis | both ambusher and cruiser | Root weevils, Tawny mole cricket, Southern mole cricket. | Citrus, Turf grass |
| Steinernema carpocapsae | ambush forager | Armyworm, Cutworm, Webwor m, Root weevils Wood borers, Artichokes plume moth. | Ornamentals, Cranberries |
| Steinernema glaseri | cruiser forager | coleopterous larvae, particularly scarabs | Citrus, Turf grass |
| Steinernema kraussei, | cruiser forager | Vine weevil. | Gardens, Ornamentals |
| Heterorhabditis megidis | cruiser forager | Root weevils. | Ornamentals |
| Heterorhabditis bacteriophora | cruiser forager | Root weevils, Wood borers, Scarabs. | Ornamentals, Berries, Turf grass |

Other species of nematodes for use in formulations of the invention include:
*Steinernema* species
   *Steinernema oregonense, Steinernema anomaly, Steinernema intermedia, Steinernema rarum, Steinernema kushidai, Steinernema abbasi, Steinernema bicomtrtum, Steinernema siamkayai, Steinernema arenarium, Steinernema cubanum, Steinernema glaseri, Steinernema karii*, *Steinernema puertoricense.*
*Heterorhabditis* species
   *Heterorhabditis Hawaiians, Heterorhabditis indicus, Heterorhabditis zealandica, Heterorhabditis downesi, Heterorhabditis marelatus, Heterorhabditis baujardi, Heterorhabditis floridness, Heterorhabditis Mexicana.*

### Methods for Producing Infective Juvenile Insect-Parasite Nematodes

For small-scale field-testing, in vivo production (as described by Woodring and Kaya (1988)-"Steinernematids and Heterorhabditids Nematodes: Handbook of Biology and Techniques". Southern Cooperative Bulletin 331, Arkanass Agricultural Experimental Station, Fayettville, Arkansas, 30pp.), is used to produce a large number of non-feeding infective juveniles.

### Infecting:

The above method involves infecting insect-larvae (meal worm or Galleria larvae) with infective juveniles of the beneficial nematodes (*steinernematids* or *heterorhabditids*). The infective juveniles are first left to warm to room temperature (20-25°C) in an aqueous suspension. Then a selected number of these nematode juveniles are transferred to specially prepare plastic containers in which a sheet of blotting paper is placed inside. Next the insect larvae are added to give a ratio of some twenty nematodes for every insect larva. The lid is replaced and the container is incubated at 25 ° C for some six to eight days.

Harvesting the new generation of juvenile nematodes:
The infected insect larvae are transferred to a water trap and over a period of 10-12 days, following infection, the new juveniles migrate from the host larvae into the water. Soon after they appear they can be easily harvested. The harvested nematodes are surface sterilised and washed several times before they are mixed together. The sterilant used comprises 0.1% Milton solution and washing is carried out using distilled water.

After harvesting, the nematodes are packed in vermiculite, and packaged in plastic containers which are sealed with a permeable film for storage and transport. However, other media and packaging forms may be employed, and suitable examples of such media and packaging will be well known to those skilled in the art.

This formulation of the invention may be used to control insect pest species found in domestic greenhouses and gardens, and in commercial greenhouses, farms and forrests. The formulation may be especially applicable for use with nursery stocks, turf grass, strawberries, cranberries, indoor or outdoor pot plants or grow bags suffering from soil insect pests attacks, and garden insect pests.

Specific examples of formulation according to the invention are provided below:
A- Formulations: 2 cruiser forager + 1 ambush forager
A1: *Heterorhabditis megidis, Heterorhabditis bacteriophora* and *Steinernema feltiae*
   This formulation would control insect pests selected from the group comprising Dipterous insects, including mushroom flies, fungus gnats, and tipulids, Lepidopterous which includes Armyworm, Cutworm, webworms, Caterpillar borers,
   Coleopterous insect larvae, Root weevils, Citrus weevils, Black vine weevils, chafers, Scarabs, Hymenoptera, and queen ants/termites.
A2: *Heterorhabditis megidis, Heterorhabditis bacteriophora* and *Steinernema carpocapsae*
   This formulation would be capable of controlling Dipterous insects, including fungus gnats, and tipulids, Lepidopterous which may includes Armyworm, Cutworm, webworms, Caterpillar borers, Coleopterous insect larvae, Root weevils, Citrus weevils, Black vine weevils, chafers, Scarabs, Hymenoptera, and queen ants/termites
B-Formulations: 2 ambush forager + 1 cruiser forager
B1: *Steinernema feltiae, Steinernema carpocapsae* + *Heterorhabditis megidis*
   This formulation is capable of controlling Dipterous insects, including mushroom flies, fungus gnats, and tipulids, Lepidopterous which may includes Armyworm, Cutworm, webworms, Caterpillar borers, Coleopterous insect larvae, Root weevils, Citrus weevils, Black vine weevils, chafers, Scarabs, and Hymenoptera, queen ants/termites.
B2: *Steinernema scapterisci, Steinernema carpocapsae* + *Heterorhabditis bacteriophora*
   This formulation is capable of controlling Dipterous insects, including fungus gnats, and tipulids, Lepidopterous which may includes Armyworm, Cutworm, webworms, Caterpillar borers, Coleopterous insect larvae, Root weevils, Citrus weevils, Black vine weevils, chafers, Scarabs, Hymenoptera, queen ants/termites, and Orthoptera, including the Tawny mole cricket and the Southern mole cricket.

### Application for Formulations A: (Based on small package 30 millions of infective juvenile nematodes)

As nematodes need moisture in the soil for movement (if the soil is too dry or compact, they may not able to search out hosts), watering the insect-infested area before or immediately after applying the formulation of the invention is advised, as it keeps the soil moist and helps the juvenile nematodes to move deeper into the soil. Care should be taken not to soak the area because nematodes in too much water cannot infect. There is no need for masks or specialized safety equipment, as the formulations of the invention are safe for plants and animals (birds, pets, children).

### Mixed with Compost.

A Before sowing or planting, or
B While the crop is growing.

The formulations of the invention may be applied to the ground before sowing or planting (in which case they are known as base dressing) or while the crop is growing, as top dressing. Dosage: 1 box of the formulation, mixed well with 160-200 litres of loose moist compost, which may be used in base dressing or in top dressing. Similar application may be applied for making out or in-door pots.

### Insert in Pots or Grow Bags.

Insert 1 spoon (one gram) of the formulated invention product in each pot; treating up to 200 pots 1 litre pot) or 3 spoons in each grow bag treating up to 60-70 grow bags.

### Insert in the Soil.

Scoop the soil to make a small holes 5-10 cm deep (using a small trowel) and 1 meter apart a around the garden. Insert 2 spoons of the formulation in each hole and gently firm the soil with the hand.

Chemical Fertilizers should be avoided roughly 2 weeks prior to and after nematode application, because they may be adversely affected by high nitrogen content.

### Storage and handling.

In general, formulations of the invention should be stored in a cool refrigerator 2-5 oC, and should not be allowed to freeze.
1 Keep in a dry place out of direct sunlight and not to be exposed to extreme temperatures.
2 Mix all the ingredients (contents) gently before use and keep away from direct sunlight.
3 Use Before Expiry Date.

Application for Formulations B: (Based on medium package 45 millions of infective juvenile nematodes).

Open a pack of the formulation of the invention and empty the entire contents (nematodes and fine soil) into a bucket or watering can, containing 4-5 litres of tap water. Mix well and leave it for 5-10 minutes to soak, mix well again and pour the entire content through a fine sieve into a spray tank and adjust to the required amount of water, stir well and spray onto the target area immediately.

Formulations of the invention may be packaged in various quantities, including:
A- Small size containing 30 millions of infective juvenile nematodes in vermiculate (as inert carrying material), may treat 160-200 small pots or 60-70 square metres.
B- Standard size containing 45 millions of infective juvenile nematodes, may treat 100 square metres.
C- Large size containing 90 millions of infective juvenile nematodes fine soil (as inert caring, may treat 200 square metres.

Two family, *Steinernematidae* and *Heterorhabditidae,* from order Rhabditida entomopathogenic nematodes have been used as most effective bio-control against wide range of soil inhabiting insect pest.

The most important key, amongst others, to successful pest control with these beneficial nematodes is:
- matching the correct nematode species with the pest species; So one of the major problems which arise with the use of the existence of the biological control product, *Steinernematids* species or *Heterorhabditids* species, sold in the market, contain only one species of the above beneficial nematodes which may able to control only a single or one group of target insect species, make it uneconomically viable, if there are a multi pest species in the field, comparing with the use of chemical pesticide which may control a wide range of insect species in one application. Many researcher have studied the possibility of using more than one species of beneficial nematodes, to control insect pests. In general the majority of them concentrate on the use of different foraging strategies ie cruisers (widely foraging) and ambusher (sit and wait).

There are several product sold in the marked such as Nematak (ambusher)-NemaSeek (cruiser) Combo (one pack for Nematak and one for NemaSeek) and others. All products claim they are more effective for the control of a wider range of insect pest over a single species application.

### EXPERIMENTAL

Several trials were set-up to compare between the foraging strategies and majority and minority species (two species from *Heterorhabditis* genus and one species from *Steinernema* genus or two species from *Steinernema* genus and one species from *Heterorhabditis* genus) to control several insect larvae and pupae in general multipurpose compost.
All the trial were conducted in FITZGERALD NURSERIES Ltd. OLDTOWN, STONEYFORD, Co. KILKENNY, REPUBLIC of IRELAND.

### I - Using 2 species from the genus Steinernema and 1 species from the genus Heterorhabditis.

### Material and methods

Source of beneficial nematodes used for all the trials blow. *Steinernema feltiae* and *Steinernema kraussei* were obtained from Nemasys dealer in Ireland, *Heterorhabditis* downesi were supplied by Dr. C. Griffin, Maynooth College, Co. Kildare, Ireland and *Steinernema carpocapsae, Heterorhabditis bacteriophora* and *Heterorhabditis megidis* were obtained from Koppert agent in Ireland.

Thirty polythene pot plants (25 X 25 centimetres) each filled with 10 litre multi-purpose compost. Each pot inserted with three plastic mesh pouches, each pouch containing 9 insect larvae (2 root vine weevils, 2 galleria larvae, 5 meal worm larvae), one on the top (1-2 centimetres below the surface), one in the middle (12 centimetres below the surface) and one in the bottom of the pot (24 centimetres below the surface). A 10 ml aliquot nematode suspension, 60000 IJs, were spread evenly on the surface of each pot in the appropriate treatment, the application rate is the same for the single species (60000), two species (30000 for each species = 600000) and in 3 species novel application (20000 for each species = 60000). The above pots were divided in three group of 10 pots and used in the following trials treatments:

### Trial 1

### A- Using 1 species from the genus Heterorhabditis and 2 species from the genus Steinernema resemble three for aging strategies.

1- Untreated Control
2- *Heterorhabditis downesi* alone
3- *Steinernema feltiae, Steinernema carpocapsae* and *Heterorhabditis downesi.*

These three species will resemble three foraging strategies, cruiser (*Heterorhabditis downesi*)*,* intermediate (*Steinernema feltiae*) and ambusher (*Steinernema carpocapsae*)*.*
1- No nematodes were added to untreated control.
2- *Heterorhabditis downesi* 10 X 60,000= 600,000
3- *Steinernema feltiae* 10 X 20.000 = 200,000
3- *Steinernema carpocapsae* 10 X 20.000 = 200,000
3- *Heterorhabditis downesi* 10 X 20.000 = 200,000

Ten millilitres of tap water were added to each pot of the untreated control.

A 10 ml aliquot nematodes, *Heterorhabditis downesi,* suspension (60000 IJs) were added evenly on top of each pot in the second treatment and similarly 60000IJs of novel mix species (20000 *Steinernema feltiae,* 20000 *Steinernema carpocapsae* and 20000 *Heterorhabditis downesi*)*.*

### B- Using 1 species from the genus Steinernema and 2 species from the genus Heterorhabditis resemble two foraging strategies.

The trial were repeated with other combination one ambusher, *Steinernema carpocapsae*, and two cruisers, *Heterorhabditis downesi* and *Heterorhabditis bacteriophora*
1- Untreated Control
2- *Steinernema carpocapsae* alone
3- *Heterorhabditis downesi, Heterorhabditis bacteriophora* and *Steinernema carpocapsae.*

1- No nematodes were added for untreated control.
2- *Steinernema carpocapsae* 10 X 60,000= 600,000
3- *Steinernema carpocapsae* 10 X 20.000 = 200,000
3- *Heterorhabditis bacteriophora* 10 X 20.000 = 200,000

Similarly, ten millilitres of tap water were added to each pot of the untreated control.
A 10 ml aliquot nematodes, *Steinernema carpocapsae* suspension (60000 IJs) were added evenly on top of each pot in the second treatment and similarly 60000IJs of novel mix species (20000 *Heterorhabditis downesi,* 20000 *Heterorhabditis bacteriophora* and 20000 *Steinernema carpocapsae*).

All the pots (for both trials) were incubated in a polythene tunnel in FITZGERALD NURSERIES for 7 days at temperatures between 6 to 18°C (air temperatures). On day 7 all the plastic mesh pouches were removed separately for each pot as top middle and bottom and all the dead insect were examined visually if the changing colour mach the specific beneficial nematode which may suggested to which nematodes species infected the host (insect larvae or pupae), or the dead insect were dissected under the stereoscopic microscope for the present the beneficial nematodes.

### Results and Discussion.

As can be seen from Table 1 when applied *Heterorhabditis downesi* alone manage to infect insect species at all levels (Top, middle and bottom) more on the top and at lesser extend at the lower levels. However in the case of vine weevils it seem it infect more on top and on the bottom as *H. downesi* known to target coleopteran larvae especially pine weevils (Dr. C. Griffin personal communication). The use of mealworm larvae is to make it more challenging for *H. downesi* as they have more tougher cuticle. Galleria larvae were used in all combinations to indicate which level the nematodes can travel deep in the pot, as these larvae have no immunity, make them an easy target by all the nematodes used in these trials. However, when *H*. *downesi* were used in the novel multi-species application, 2 *Steinernematids* species and one *Heterorhabditids* species, one ambusher, one intermediate (ambusher and cruiser) and one cruiser [*Steinernema carpocapsae* (ambusher), *Steinernema feltiae* (cruiser and ambusher) and *Heterorhabditis downesi.* (cruiser)], this combination manage to increase the infection by nearly between 50 - 100% (see Table 2) and followed the same patron as in Table 1, higher on the top and lower on the middle and the bottom but still higher than the single species application by at lease 50 - 100%.

**Table 1**

| Percentage of insect larvae attacked by *Heterorhabditis downesi* alone. | | | |
|---|---|---|---|
| Location | Vine weevils larvae | Meal worm larvae | Galleria larvae |
| Top | 10/20 = 50% | 19/40 = 47.5% | 15/20 = 75% |
| Middle | 3/20 = 15% | 22/40 = 55% | 10/20 = 50% |
| Bottom | 5/20 = 25% | 11/40 = 27.5% | 9/20 = 45% |
| Total | 18/60 = 30% | 52/120 = 43.35% | 34/60 = 56.75% |
| | General Total | 104/240 = 43.3% | |

**Table 2**

| Percentage of insect larvae attacked by a novel multi-species application (*Steinernema carpocapsae, Steinernema feltiae* and *Heterorhabditis downesi*). | | | |
|---|---|---|---|
| Location | Vine weevils larvae | Mealworm larvae | Galleria larvae |
| Top | 16/20 = 80% | 39/40 = 97.55% | 20/20 = 100% |
| Middle | 17/20 = 85% | 35/40 = 87.55% | 20/20 = 100% |
| Bottom | 12/20 = 60% | 29/40 = 75.55% | 19/20 = 95% |
| Total | 45/60 = 75% | 103/120 = 85.8% | 59/60 = 98.35% |
| | General Total | 207/240 = 86.3% | |

*Steinernema carpocapsae* usually used to control coleopteran (Root weevils, Billbugs) larvae and pupae and also recommended to control lepidopteron larvae (Artichoke plume moth, Armyworm, Cutworm, Webworm). In the second trial 2 vine weevils, 5 mealworm pupae, 5 mealworm larvae and 2 galleria larvae were used in this trial.

Table 3 show that *Steinernema carpocapsae* followed the same patron as in *H. downesi* when applied alone Table 1. The highest attack on the top and lowest at the bottom. However when used in multi species, 2 *Heterorhabditids* species and one *Steinernematids* species, two cruiser and one ambusher (*H. downesi* (cruiser), *H. bacteriophora* (cruiser), and *S. carpocapsae* (ambusher). Table 4 also show a higher infected larvae and pupae (more than 30 - 100%) although the total attack is less the in *H*. *downesi,* multi-species, application Table 4, is still nearly 50% improvement than the single *S. carpocapsae* species application (see Tables 3 & 4).

**Table 3**

| Percentage of insect larvae attacked by *S. carpocapsae* alone. | | | | |
|---|---|---|---|---|
| Locatio n | Vine weevils larvae | Meal worm pupae | Meal worm larvae | Galleria larvae |
| Top | 14/20 = 70% | 33/50 = 66% | 31/50 = 62% | 13/20 = 65% |
| Middle | 9/19 = 47.4% | 20/50 = 40% | 13/50 = 26% | 8/20 = 40% |
| Bottom | 4/19 = 21.1 % | 22/50 = 44% | 17/50 = 34% | 11/20 = 55% |
| Total | 27/58 = 46.5% | 75/150 = 50% | 61/150 = 41% | 32/60 = 53% |
| | General Total | 195/365=53.4 % | | |

**Table 4**

| Percentage of insect larvae attacked by a novel multi-species application (*H. downesi, H*. *bacteriophora* and *S. carpocapsae*) | | | | |
|---|---|---|---|---|
| Locatio n | Vine weevils larvae | Meal worm pupae | Meal worm larvae | Galleria larvae |
| Top | 13/20 = 65% | 42/50 = 84% | 39/50 = 78% | 17/20 = 85% |
| Middle | 15/20 = 75% | 35/50 = 70% | 34/50 = 68% | 17/20 = 85% |
| Bottom | 14/20 = 70% | 33/50 = 66% | 28/50 = 56% | 16/20 = 80% |
| Total | 42/60 = 70% | 110/150 = 73.3% | 101/150 = 67.3%. | 50/60 = 83.3% |
| | General Total | 303/420 = 72% | | |

### Trial 2

### Material and methods

The second trial were conducted also in FITZGERALD NURSERIES with different combinations and similarly incubated in polythene tunnel at for 6 days at temperatures between 7 to 15 °C. On day 6 all the plastic mesh pouches were removed separately for each pot as top middle and bottom and all the dead insect were examined visually if the changing colour mach the specific beneficial nematode which may suggested to which nematodes species infected the host (insect larvae or pupae), or the dead insect were dissected under the stereoscopic microscope for the present the beneficial nematodes.

### C- Using 1 species from the genus Steinernema and 2 species from the genus Heterorhabditis resemble only one foraging strategies.

*Steinernema kraussei* usually used to control coleopteran, pine weevils, vine weevils.

In this trial 5 maggot larvae, 5 mealworm pupae, 5 mealworm larvae and 3 galleria larvae were used in this trial.

### Results and Discussion.

Table 5 show that S. kraussei followed the same patron as in H. downesi and in S. carpocapsae, when it applied alone Table 1 and Table 3. The highest attack on the top and lowest at the bottom. However when used in multi species (majority and minority), 2 *Heterorhabditids* species and one *Steinernematids* species, all represent cruiser foragers. (*H*. *downesi* (cruiser), *H. megidis* (cruiser) and *S. kraussei* (cruiser).

Table 5 also show a higher infected larvae and pupae (more than 30 - 100%) although the total attack is less the in *H*. *downesi,* multi-species application, Table 6, is still nearly 50% improvement than the single species (see Tables 5 & 6).

**Table 5**

| Percentage of insect larvae attacked by *S. kraussei* alone | | | | |
|---|---|---|---|---|
| Locati on | Maggot larvae (5) | Mealworm pupae (5) | Mealworms larvae (5) | Galleria larvae (3) |
| Top | 18/44 = 40.9% | 36/50 = 72% | 48/50 = 96% | 25/30 = 83.3% |
| Middle | 7/43 = 16.3% | 34/50 = 68% | 37/50 = 74% | 27/30 = 90% |
| Bottom | 3/35 = 8.8% | 21/50 = 42% | 0/50 = 0% | 8/30 = 23.3% |
| Total | 28/122 = 22.9 | 91/150 = 60.7% | 85/150 = 56.7% | 60/90 = 66.7% |
| | General Total | 264/512 = 51.6% | | |

**Table 6**

| Percentage of insect larvae attacked by a novel multi-species application (*H. downesi, H*. *megidis* and *S. kraussei*) | | | | |
|---|---|---|---|---|
| Location n | Maggot larvae (5) | Mealworm pupae (5) | Mealworms larvae (5) | Galleria larvae (3) |
| Top | 22/41 = 53.6% | 40/50 = 80% | 50/50 = 100% | 30/30 = 100% |
| Middle | 10/42 = 23.8% | 45/50 = 90% | 49/50 = 98% | 30/30 = 100% |
| Bottom | 13/44 = 29.5% | 40/50 = 80% | 13/50 = 26% | 30/30 = 100% |
| Total | 45/127 = 35.4% | 125/150 = 83.3% | 112/150 = 74.7% | 90/90 = 100% |
| | General Total | 37.2/517 = 72% | | |

### D- Using 1 species from the genus Steinernema and 2 species from the genus Heterorhabditis resemble " two foraging strategies".

*Steinernema feltiae* usually used to control dipterans larvae, glasshouse sciarids and destroys sciarid larvae in mushroom compost.

In this trial 5 maggot larvae, 5 mealworm pupae, 5 mealworm larvae and 3 galleria larvae were used in this trial.

### Results and Discussion.

Table 7 show that *S. feltiae* followed the same patron as in H. downesi Table 1, *S. carpocapsae* Table 3 and S. kraussei Table 5, when they applied alone, . The highest attack on the top and lowest at the bottom. However when used in multi species, 2

*Heterorhabditids* species and one *Steinernematids s*pecies, ., two cruiser and one intermediate (cruiser and ambusher) (*H. downesi* (cruiser), *H. megidis* (cruiser) and *S*. *feltiae* [intermediate (cruiser and ambusher)]. Table 8 also show a higher infected larvae and pupae (more than 30 - 100%) the total attack in S. feltiae, multi-species application Table 8, is still more than 70% improvement than the single species application (see Tables 7).

**Table 7**

| Percentage of insect larvae attacked by *Steinernema feltiae* alone. | | | | |
|---|---|---|---|---|
| Location n | Maggot larvae (5) | Mealworm pupae (5) | Mealworms larvae (5) | Galleria larvae (3) |
| Top | 10/36 = 27.8% | 40/50 = 80% | 45/50 = 90% | 22/30 = 73.3% |
| Middle | 6/32 = 35.3% | 25/50 = 50% | 7/50 = 14% | 10/30 = 33.3% |
| Bottom | 4/37 = 10.8% | 20/50 = 40% | 7/50 = 16% | 3/30 = 10% |
| Total | 20/105 = 19% | 85/150 = 56.7% | 59/150 = 39.3% | 35/90 = 38.9% |
| | General Total | 199/495 = 40.2% | | |

**Table 8**

| Percentage of insect larvae attacked by *Steinernema feltiae*, multi-species application (*H. downesi, H. megidis* and *S*. *feltiae*). | | | | |
|---|---|---|---|---|
| Locati on | Maggot larvae (5) | Mealworm pupae (5) | Mealworms larvae (5) | Galleria larvae (3) |
| Top | 12/39 = 30.8% | 39/50 = 78% | 50/50 = 100% | 25/30 = 83.3% |
| Middle | 19/45 = 42.2% | 49/50 = 98% | 40/50 = 80% | 27/30 = 90% |
| Bottom | 11/33 = 33.3%) | 40/50 = 80% | 20/50 = 40% | 25/30 = 83.3% |
| Total | 42/117=35.9% | 128/150 = 85.3% | 110/150 = 73.3% | 77/90 = 85.5% |
| | General Total | 357/507 = 70.4% | | |

In general found the attack by each species, of beneficial nematodes tried above, mainly on the top and lesser for the deeper attack. All the nematodes used appear to have the capability to use different foraging strategies specially in the case of S. carpocapsaeas as an ambusher found to be able to roam deeper in the compost and attack host at all locations (top, middle and bottom) Tables 1-8. However the majority and minority combination, increase the attack by 30- 100% at all levels and by all the nematodes species used here. The foraging behaviours made no different in the majority and minority combinations, in all the species combinations used, ambusher, intermediate (cruiser and ambusher) and (cruiser) Table 2, two cruiser and one ambusher Table 4, all represent cruiser foragers Table 6 and two cruiser and one intermediate (cruiser and ambusher) Table 8. All the species are present and capable to infect at all levels (top, middle and bottom), a higher on top and middle and lesser on the bottom but there are a higher increase in the attack more than double comparing with the single species (see Tables 1-8).

Other trials were conducted to assess the benefit of the use of two species from the same genus with different or same foraging strategies.

As can been seen from Table 9 the beneficial nematodes (*S. Krause* (cruiser)) and *S*. *feltiae* (intermediate) manage to attack the host at all levels and followed the same patron as in single species and in novel combination. However the level of the attack as low as in the single species (see Tables 1, 3, ,5 and 7).

**Table 9**

| Percentage of insect larvae attacked by *Steinernema kraussei* and *Steinernema feltiae* | | | | |
|---|---|---|---|---|
| Locatio n | Maggot larvae (5) | Mealworm pupae (5) | Mealworms larvae (5) | Galleria larvae (3) |
| Top | 14/50 - 28% | 38/50 = 76% | 39/50 = 78% | 23/30 = 76.7% |
| Middle | 10/46 = 21.7% | 36/50 = 72% | 44/50 = 89% | 22/30 = 73.3% |
| Bottom | 5/48 = 10.4% | 27/50 = 54% | 3/50 = 6% | 20/30 = 66.7% |
| Total | 29/144 = 20% | 101/150 = 67.3 | 86/150 = 57% | 65/90 = 72.2% |
| | General Total | 281/534 = 52.6% | | |

Table 10 shows that the beneficial nematodes (*S*. *Krause* (cruiser) )and *S. carpocapsae* (ambusher) manage to attack the host at all levels and similarly followed the same patron as in single species and in novel combination. However the level of the attack as low as in the single species (see Tables 1, 3 ,5 and 7).

**Table 10**

| Number of insect larvae attacked by *S*. *kraussei* and *S. carpocapsae.* | | | | |
|---|---|---|---|---|
| Locatio n | Maggot larvae (5) | Mealworm pupae (5) | Mealworms larvae (5) | Galleria larvae (3) |
| Top | 8/38 = 21% | 32/50 = 64% | 46/50 = 92% | 20/30 = 66.7% |
| Middle | 6/49 = 12.2% | 24/50 = 48% | 29/50 = 58% | 21/30 = 70% |
| Bottom | 2/45 = 4.4% | 27/50 = 54% | 2/50 = 4% | 18/30 = 60% |
| Total | 16/132 = 12.1% | 83/150 = 55.5% | 77/150 = 51.3% | Maggot larv% |
| | General Total | 235/522 = 45% | | |

Table 11 also shows that the beneficial nematodes, *H. downesi* (cruiser) and *H. megidis* (cruiser) manage to attack the host at all levels and similarly followed the same patron as in single species and in novel combination. However the level of the attack as low as in the single species (see Tables 1, 3, 5 and 7).

**Table 11**

| Number of insect larvae attacked by *H. downesi* and *H*. *megidis*. | | | | |
|---|---|---|---|---|
| Location | Maggot larvae (5) | Mealworm pupae (5) | Mealworms larvae (5) | Galleria larvae (3) |
| Top | 12/43= 27.9% | 37/50 = 74% | 13/50 = 26% | 23/30 = 76.7% |
| Meddle | 11/50= 22% | 37/50= 74% | 17/50 = 34% | 22/30 = 44% |
| Bottom | 5/50= 10% | 22/50= 44% | 4/50 = 8%) | 12/30 = 40% |
| Total | 28/143= 19.6% | 96/150= 64% | 34/150 = 22.7% | 57/90 = 63.3% |
| | General Total | 215/533=40.3% | | |

The result from Tables 9, 10 and 11 suggest there is no benefit to using combinations consisting of species form the same genus. Kaya and Koppenhofer (1996) stated that this competition can reduce nematode fitness and can cause local extinction of a nematodes species.

To confirm, the advantages of this invention over the prior art includes the following points:
(i) The minority species is more effective in a multi species formulation of the invention than by itself. This was found to be the case at all depths.
(ii) The formulation of this invention is independent of foraging strategy utilised by the nematode as the killing effect is strong when the same foraging strategy (all cruiser or all ambusher) or different foraging strategies are tested.
(iii) The timing of the introduction of the beneficial nematodes and host species by Neumann et al. (2006) is different from the formulation of this invention.

### References Cited

Kaya, H. K., and A.M. Koppenhofer (1996). Coexistence of entomopathogenic nematode species (Steinernematidae and Heterorhabditidae) with different foraging behavior. Fundam. Appl. Nemattol. 19: 175-183.

Neumannn, C. and E. J. Shield. 2006. Interspecific Interractions Among Three Entomopathogenic Nematodes, Steinernema carpocapsae Weiser, Steinernema feltiae Filipjev, and Heterorhabditis bacteriophora Poinar, with Different Foraging Strategies for Hostsin Multipiece sand Columns. Environ. Entomol. 35(6): 1576-1583.

## Claims

1. A packaged product comprising a formulation for use in the biological control of insect pests, the formulation comprising a cohort of infective juvenile insect-parasitic nematodes and a medium for the nematodes, the cohort consisting essentially of a mixture of three species in which two of the species are from a first genus selected from one of *Steinernema* and *Heterorhabtidis* and one of the species is from a second genus selected from the other of *Steinernema* and *Heterorhabtidis.*

2. A packaged product as claimed in Claim 1 in which the two species are from the *Steinernema* genus and the one species is from the *Heterorhabditis* genus.

3. A packaged product as claimed in Claim 1 in which the two species are from the *Heterorhabditis* genus and the one species is from the *Steinernema* genus.

4. A packaged product as claimed in Claim 2 or 3 in which the species of *Heterorhabditis* is/are selected from the group comprising: *Heterorhabditis megidis; Heterorhabditis downesi* and *Heterorhabditis bacteriophora.*

5. A packaged product as claimed in Claim 2, 3 or 4 in which the species of Steinernema is/are selected from the group comprising: *Steinernema feltiae; Stinernema scapterisci; Steinernema riobravis; Steinernema carpocapsae; and Steinernema kraussei.*

6. A packaged product as claimed in Claim 1 in which the cohort of infective juvenile insect-parasitic nematodes is selected from the group consisting of:
(a) *Heterorhabditis downesi, Heterorhabditis bacteriophora and Steinernema feltiae;*
*(b) Heterorhabditis downesi, Heterorhabditis bacteriophora and Steinernema carpocapsae;*
*(c) Heterorhabditis megidis, Heterorhabditis bacteriophora and Steinernema kraussei;*
*(d) Heterorhabditis megidis, Heterorhabditis downsei and Steinernema kraussei;*
*(e) Heterorhabditis downesi, Heterorhabditis megidis and Steinernema carpocapsae;*
*(f) Steinernema feltiae*, *Steinernema carpocapsae and Heterorhabditis downesi;*
*(g) Steinernema feltiae*, *Steinernema carpocapsae and Heterorhabditis besteriophora;*
*(h) Steinernema scapterisci, Steinernema carpocapsae and Heterorhabditis bacteriophora;*
*(i) Steinernema scapterisci, Steinernema carpocapsae and Heterorhabditis downesi;*
*(j) Steinernema feltiae*, *Steinernema carpocapsae and Heterorhabditis megidis; and*
*(k) Steinernema scapterisci, Steinernema carpocapsae and Heterorhabditis megidis;*

7. A packaged product as claimed in any preceding Claim in which the medium is selected from the group comprising vermiculite, fine clay, and water.

8. A method for the biological control of a predetermined target insect pest, which method employs a packaged product according to any of Claims 1 to 7, and in which the single species in the formulation is a specialised parasite against the predetermined target insect pest, the method comprising the step of applying the formulation in the packaged product to soil or other media in which an agricultural product and the predetermined target insect pest is growing.

9. A method as claimed in Claim 8 in which the predetermined target insect pest is one or more of Sciarid larvae and Fungus gnats, and wherein the cohort of infective juvenile nematodes consists of *Steinernema felitae* and two species of *Heterorhabditis.*

10. A method as claimed in Claim 8 in which the predetermined target insect pest is one or more of the Tawny mole cricket and the Southern mole cricket, and wherein the cohort of infective juvenile nematodes consists of *Steinernema scapterisci* and two species of *Heterorhabditis.*

11. A method as claimed in Claim 8 in which the predetermined target insect pest is one or more of Root weevils, the Tawny mole cricket, and the Southern mole cricket, and wherein the cohort of infective juvenile nematodes consists of *Steinernema riobravis,* and two speciesof *Heterorhabditis.*

12. A method as claimed in Claim 8 in which the predetermined target insect pest is a Root weevil, and wherein the cohort of infective juvenile nematodes consists of *Heterorhabditis megidis,* and two species of *Steinernema,* or in which the predetermined target insect pest is one or more of Armyworms, Cutworms, Webworms, Root weevils, Wood borers, Artichoke Plume moths, and wherein the cohort of infective juvenile nematodes consists of *Steinernema carpocapsae* and two species of *Heterorhabditis,* or in which the predetermined target insect pest is one or more of Root weevils, Wood borers, and Scarabs, and wherein the cohort of infective juvenile nematodes consists of *Heterorhabditis bacteriophora* and two species of *Steinernema.*

## Patentansprüche

1. Verpacktes Produkt, das eine Formulierung für die Verwendung in der biologischen Kontrolle von Schadinsekten umfasst, wobei die Formulierung eine Kohorte von infektiösen juvenilen insektenparasitären Nematoden und ein Medium für die Nematoden umfasst, die Kohorte im Wesentlichen aus einer Mischung von drei Spezies besteht, in welcher zwei der Spezies von einer ersten Gattung sind, die aus einem von *Steinernema* und *Heterorhabditis* ausgewählt ist, und eine der Spezies von einer zweiten Gattung ist, die aus dem anderen von *Steinernema* und *Heterorhabditis* ausgewählt ist.

2. Verpacktes Produkt nach Anspruch 1, in welchem die zwei Spezies von der *Steinernema-*Gattung sind und die eine Spezies von der *Heterorhabditis-*Gattung ist.

3. Verpacktes Produkt nach Anspruch 1, in welchem die zwei Spezies von der *Heterorhabditis*-Gattung sind und die eine Spezies von der *Steinernema*-Gattung ist.

4. Verpacktes Produkt nach Anspruch 2 oder 3, in welchem die Spezies von *Heterorhabditis* aus der Gruppe ausgewählt ist/sind, die Folgendes umfasst: *Heterorhabditis megidis; Heterorhabditis downesi* und *Heterorhabditis bacteriophora.*

5. Verpacktes Produkt nach Anspruch 2, 3 oder 4, in welchem die Spezies von *Steinernema* aus der Gruppe ausgewählt ist/sind, die Folgendes umfasst: *Steinernema feltiae; Steinernema scapterisci; Steinernema riobravis; Steinernema carpocapsae;* und *Steinernema kraussei.*

6. Verpacktes Produkt nach Anspruch 1, in welchem die Kohorte von infektiösen juvenilen insektenparasitären Nematoden aus der Gruppe ausgewählt ist, die aus Folgenden besteht:
(a) *Heterorhabditis downesi, Heterorhabditis bacteriophora und Steinernema feltiae;*
(b) *Heterorhabditis downesi, Heterorhabditis bacteriophora und Steinernema carpocapsae;*
(c) *Heterorhabditis megidis, Heterorhabditis bacteriophora und Steinernema kraussei;*
(d) *Heterorhabditis megidis, Heterorhabditis downesi und Steinernema kraussei;*
(e) *Heterorhabditis downesi, Heterorhabditis megidis und Steinernema carpocapsae;*
(f) *Steinernema feltiae, Steinernema carpocapsae und Heterorhabditis downesi;*
(g) *Steinernema feltiae, Steinernema carpocapsae und Heterorhabditis bacteriophora;*
(h) *Steinernema scapterisci, Steinernema carpocapsae und Heterorhabditis bacteriophora;*
(i) *Steinernema scapterisci, Steinernema carpocapsae und Heterorhabditis downesi;*
(j) *Steinernema feltiae, Steinernema carpocapsae und Heterorhabditis megidis; und*
(k) *Steinernema scapterisci, Steinernema carpocapsae und Heterorhabditis megidis.*

7. Verpacktes Produkt nach einem vorstehenden Anspruch, in welchem das Medium aus der Gruppe ausgewählt ist, die Vermiculit, feinen Ton und Wasser umfasst.

8. Verfahren für die biologische Kontrolle eines vorgegebenen Zielschadinsekts, welches Verfahren ein verpacktes Produkt nach einem der Ansprüche 1 bis 7 einsetzt und in welchem die einzelne Spezies in der Formulierung ein spezialisierter Parasit gegen das vorgegebene Zielschadinsekt ist, wobei das Verfahren den Schritt der Anwendung der Formulierung in dem verpackten Produkt auf der Erde oder anderem Medium umfasst, in welchem ein landwirtschaftliches Erzeugnis und das vorgegebene Zielschadinsekt wachsen.

9. Verfahren nach Anspruch 8, in welchem das vorgegebene Zielschadinsekt eines oder mehrere von Trauermückenlarven und Pilzmücken ist und wobei die Kohorte von infektiösen juvenilen Nematoden aus *Steinernema feltiae* und zwei Spezies von *Heterorhabditis* besteht.

10. Verfahren nach Anspruch 8, in welchem das vorgegebene Zielschadinsekt eines oder mehrere von der Lohfarbenen Maulwurfsgrille und der Südlichen Maulwurfsgrille ist und wobei die Kohorte von infektiösen juvenilen Nematoden aus *Steinernema scapterisci* und zwei Spezies von *Heterorhabditis* besteht.

11. Verfahren nach Anspruch 8, in welchem das vorgegebene Zielschadinsekt eines oder mehrere von Wurzelrüsselkäfern, der Lohfarbenen Maulwurfsgrille und der Südlichen Maulwurfsgrille ist und wobei die Kohorte von infektiösen juvenilen Nematoden aus *Steinernema riobravis* und zwei Spezies von *Heterorhabditis* besteht.

12. Verfahren nach Anspruch 8, in welchem das vorgegebene Zielschadinsekt ein Wurzelrüsselkäfer ist und wobei die Kohorte von infektiösen juvenilen Nematoden aus *Heterorhabditis megidis* und zwei Spezies von *Steinernema* besteht oder in welchem das vorgegebene Zielschadinsekt eines oder mehrere von Heerwürmern, Erdraupen, netzspinnenden Raupen, Wurzelrüsselkäfern, Holzbohrern, Artischocken-Feder-Motten ist und wobei die Kohorte von infektiösen juvenilen Nematoden aus *Steinernema carpocapsae* und zwei Spezies von *Heterorhabditis* besteht oder in welchem das vorgegebene Zielschadinsekt eines oder mehrere von Wurzelrüsselkäfern, Holzbohrern und Blatthornkäfern ist und wobei die Kohorte von infektiösen juvenilen Nematoden aus *Heterorhabditis bacteriophora* und zwei Spezies von *Steinernema* besteht.

## Revendications

1. Produit emballé comprenant une formulation destinée à une utilisation dans le contrôle biologique d'insectes nuisibles, la formulation comprenant une cohorte de nématodes parasites d'insectes juvéniles infectieux et un milieu pour les nématodes, la cohorte étant essentiellement constituée d'un mélange de trois espèces où deux des espèces sont issues d'un premier genre choisi parmi l'un parmi *Steinernema* et *Heterorhabditis* et l'une des espèces est issue d'un deuxième genre choisi parmi l'un parmi *Steinernema* et *Heterorhabditis.*

2. Produit emballé selon la revendication 1, dans lequel les deux espèces sont issues du genre *Steinernema* et l'espèce unique est issue du genre *Heterorhabditis.*

3. Produit emballé selon la revendication 1, dans lequel les deux espèces sont issues du genre *Heterorhabditis* et l'espèce unique est issue du genre *Steinernema.*

4. Produit emballé selon la revendication 2 ou 3, dans lequel la ou les espèces d'*Heterorhabditis* sont choisies dans le groupe constitué par *Heterorhabditis megidis* ; *Heterorhabditis downesi* et *Heterorhabditis bacteriophora.*

5. Produit emballé selon la revendication 2, 3, ou 4, dans lequel la ou les espèces de *Steinernema* sont choisies dans le groupe constitué par *Steinernema feltiae* ; *Steinernema scapterisci* ; *Steinernema riobravis* ; *Steinernema carpocapsae* ; et *Steinernema kraussei.*

6. Produit emballé selon la revendication 1, dans lequel la cohorte de nématodes parasites d'insectes juvéniles infectieux est choisie dans le groupe constitué par :
(a) *Heterorhabditis downesi, Heterorhabditis bacteriophora* et *Steinernema feltiae* ;
(b) *Heterorhabditis downesi, Heterorhabditis bacteriophora* et *Steinernema carpocapsae* ;
(c) *Heterorhabditis megidis, Heterorhabditis bacteriophora* et *Steinernema kraussei* ;
(d) *Heterorhabditis megidis, Heterorhabditis downesi* et *Steinernema kraussei* ;
(e) *Heterorhabditis downesi, Heterorhabditis megidis* et *Steinernema carpocapsae* ;
(f) *Steinernema feltiae, Steinernema carpocapsae* et *Heterorhabditis downesi* ;
(g) *Steinernema feltiae, Steinernema carpocapsae* et *Heterorhabditis bacteriophora* ;
(h) *Steinernema scapterisci, Steinernema carpocapsae* et *Heterorhabditis bacteriophora* ;
(i) *Steinernema scapterisci, Steinernema carpocapsae* et *Heterorhabditis downesi* ;
(j) *Steinernema feltiae, Steinernema carpocapsae* et *Heterorhabditis megidis* ;
(k) *Steinernema scapterisci, Steinernema carpocapsae* et *Heterorhabditis megidis.*

7. Produit emballé selon l'une quelconque des revendications précédentes, dans lequel le milieu est choisi dans le groupe constitué par la vermiculite, l'argile fine, et l'eau.

8. Méthode de contrôle biologique d'un insecte nuisible cible prédéterminé, laquelle méthode emploie un produit emballé selon l'une quelconque des revendications 1 à 7, et où l'espèce unique dans la formulation est un parasite spécialisé contre l'insecte nuisible cible prédéterminé, la méthode comprenant l'étape consistant à appliquer la formulation dans le produit emballé à un sol ou un autre milieu dans lequel un produit agricole et l'insecte nuisible cible prédéterminé se développent.

9. Méthode selon la revendication 8, dans laquelle l'insecte nuisible cible prédéterminé est un ou plusieurs parmi les larves de *Sciaridae* et les fongicoles, et où la cohorte de nématodes juvéniles infectieux est constituée de *Steinernema feltiae* et de deux espèces d'*Heterorhabditis.*

10. Méthode selon la revendication 8, dans laquelle l'insecte nuisible cible prédéterminé est un ou plusieurs parmi *Scapteriscus vicinus* et *Scapteriscus borellii,* et où la cohorte de nématodes juvéniles infectieux est constituée de *Steinernema scapterisci* et de deux espèces d'*Heterorhabditis.*

11. Méthode selon la revendication 8, dans laquelle l'insecte nuisible cible prédéterminé est un ou plusieurs parmi les charançons des racines, *Scapteriscus vicinus* et *Scapteriscus borellii,* et où la cohorte de nématodes juvéniles infectieux est constituée de *Steinernema riobravis* et de deux espèces d'*Heterorhabditis.*

12. Méthode selon la revendication 8, dans laquelle l'insecte nuisible cible prédéterminé est un charançon des racines, et où la cohorte de nématodes juvéniles infectieux est constituée d'*Heterorhabditis megidis* et de deux espèces de *Steinernema,* ou dans laquelle l'insecte nuisible cible prédéterminé est un ou plusieurs parmi les chenilles légionnaires, les vers gris, les chenilles tisseuses, les charançons des racines, les buprestes, le ptérophore de l'artichaut, et où la cohorte de nématodes juvéniles infectieux est constituée de *Steinernema carpocapsae* et de deux espèces d*'Heterorhabditis,* ou dans laquelle l'insecte nuisible cible prédéterminé est un ou plusieurs parmi les charançons des racines, les buprestes, et les scarabées, et où la cohorte de nématodes juvéniles infectieux est constituée d'*Heterorhabditis bacteriophora* et de deux espèces de *Steinernema.*
